# EUROPEAN PATENT APPLICATION

(11) **EP 1 291 771 A2**
(43) Date of publication of application: **12.03.2003**
(21) Application number: 02019091.4
(22) Date of filing: 28.08.2002
(51) Int. Cl.: G06F 9/48

(54) **Method for creating a schedule, apparatus for creating a schedule, and computer-program for creating a schedule**

(30) Priority: 28.08.2001 JP 2001258637
(71) Applicant: MATSUSHITA ELECTRIC INDUSTRIAL CO., LTD., Kadoma-shi, Osaka 571-8501 (JP)
(72) Inventor: Matsuura, Shun, Tokyo 166-0014 (JP); Nakamitsu, Hiroaki, Fujisawa-shi, Kanagawa 251-0002 (JP); Ito, Hayashi, Matsudo-shi, Chiba 271-0045 (JP)
(74) Representative: Betten & Resch

(57) **Abstract**

In a server that communicates with a large number of pieces of information equipment, a communication schedule between the server and the information equipment is created appropriately and efficiently.

Provided is an apparatus for creating a schedule that included: a calculation section for a table of maximum values of processing member for every time slot, which calculates a table of maximum values of processing number for every time slot, which is obtained by finding the maximum values of the number of processing performed in every time slot in a cycle of N days; and a time slot cal culat ion section that finds a time slot having the minimum value out of the maximum value s obtained in the foregoing manner, in order to find a time slot in which processing performed in the same time slot is brought to the minimum under the rule that the processing including communication is performed in the same time slot every N days.

## Description

### BACKGROUND OF THE INVENTION

### Field of the Invention

The present invention relates to a method, an apparatus and a computer program for creating a schedule, which allocate execution time slots for operation. As an example of creating a schedule, a server chooses time slot s when it transmit s control instructions to a plurality of client apparatuses and creates a schedule. In this case, it is required that a schedule be created so that the load in each time slot to the server does not become excessive. Furthermore, the present invention relates to a method, an apparatus and a computer-program, in which an information consumer electronics server performs remote control to a particular information consumer electronics terminal and the remote control is performed in a timin g where dispersio n of server resources in the information consumer electronics server is considered, particularly under the environment where the information consumer electronics server is connected to a plurality of information consumer electronics terminals by broadcasting or other communication.

### Description of Prior Art

In the case of tran smitting the control instruction to a plurality of client apparatuses, the server communicates to the client apparatuses or the client apparatuses communica tes to the server, to establish a communication path, and thus control instructions are transmitted from the server. Conventionally, due to the high pric e of the client apparatus which communicates with the server and the number of client apparatuses with which one server communicates has been as high as one hundred, there has not been a particular need for making an arrangement for creating s communication schedule.

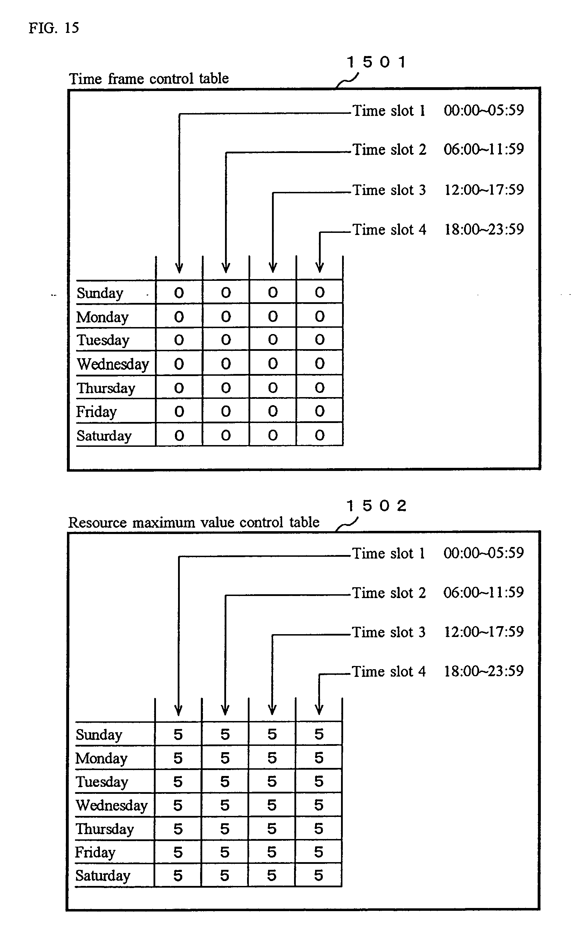

Further, even in the case of making an arrangement, the arrangement has been inadequate, and the control table as shown in Fig. 15 has conventionally been used in order to control the timing of remote control taking in consideration the dispersion of server resources. In Fig. 15, Table 1501 is a time frame control table that controls reservation status of resource in every time frame, and Table 1502 is a resource maximum value control table that controls the maximum value of the server resource.

In Fig. 15, time slots where 1 day is divided into four time slots (time slot 1 = 00:00 to 05:59, time slot 2 = 06:00 to 11:59, time slot 3 = 12:00 to 17:59, time slot 4 = 18:00 to 23:59) are used as an example. Further, a cycle where the server resource is dispersed is set to 1 week (7 days). Accordingly in the example of Fig. 15, the reservation status of resource is controlled on the time frame control table 1501 based on the total of 28 time frames regarding each time slot, where each day of the week is divided into four time slots. Furthermore, the maximum value of the server resource is controlled on the resource maximum value control table 1502 based on the total of 28 time frames regarding each time slot, where each day of the week is divided into four time slots, in the same manner.

In a conventional method, it only confirms that, when an additional reservation of resource is newly made for 'a time slot of a day of the week' , a value of the relevant time frame in the time frame control table 1501 after reservation has been added does not exceed the relevant time frame of the resource maximum value control table 1502, and it determines that addition of new resource reservation can be made when the value has not exceeded and processing to add the reservation is performed. Note that the algorithm to make the time frame control table 1501 has an even reservation status can be cited as an example of conventional algorithm to decide 'a time slot of a day of the week'. This algorithm decides a time frame having the smallest number of reservation status as in the time frame control table 1501 as a time frame where addition of new resource reservation is made.

As described above, in the environment under which the server is connected with a plurality of client apparatu ses in the prior art, consideration has only been made as to how the server resource should be dispersed in 1 cycle at most, that is, 1 week (7 days ) in the example of Fig. 15.

However, information consumer electronics products, which are information equipment having a function to communicate with the server via a telephone line, have been provided inexpensively in recent years, the number of client apparatuses having the function to communicate with the server has increased at a faster rate, and it is predicted that the number will reach several hundreds of thousand or even a level of a few million. In addition, because the information consumer electronics products are used for a long period of time, the server apparatus needs to issue control instructions repeatedly to regularly perform function setting or the like. Consequently, in the server apparatus that communicates with a large number of client apparatuses, there exists a problem that the server apparatus is overloaded and sufficient service cannot be provided unless communication schedule between the server apparatus and the client apparatuses is appropriately created. Further, there also exists a problem that operation of creating schedule must be efficiently performed.

Furthermore in the prior art, when the server resource is dispersed for a plurality of cycles, processing to add reservation can only be performed to the time frame control table and the resource maximum value control table that are independent of each other, and accordingly, there also exists aproblem that the server resource has not bee n effectively utilized taking in consideration the relation among a plurality of cycles.

The method, the apparatus and the computer-program for creating schedule to solve these problems have not been known.

### SUMMARY OF THE INVENTION

In the present invention, a method is provided to find a time slot in which processing performed in the same time slot is brought to the minim um under the rule that the processing including communication is performed in the same time slot every time a specified period passes, which is a method for creating a schedule that comprises of the steps of: finding the maximum value of a number of processing for each time slot in a cycle of the specified period and calculating a table of maximum values of processing number for every time slot; and finding a time slot having the minimum value among the maximum values found in such a manner. With this configuration, the time slot having the minimum processing number can be found and the load to the server apparatus can be minimized when the server apparatus communicates with the client apparatuses to transmit the control instruction every time the specified period passes, and thus the problems can be solved.

Secondly, in the present invention, provided is a method for creating a schedule that further includes the step of: associating a processing identifier that identifies processing to be performed with the time slot found and holding it. With this configuration, the contents of processing are associated with the time slot having the minimum load to the server and the processing is executed, and thus the load to the server minimized, which solves the problems.

Thirdly, in the case of newly associating the processing identifier with the time slot, a method for updating the table of maximum values of processing number for every time slot is provided when the number of the processing identifiers associated with the time slot before they are newly associated is equal to the maximum number of processing in the time slot. With this configuration, a task to find the table of maximum values of processing number for every time slot is reduced, and the operation to create schedule can be efficiently performed, which solves the problems.

Furthermore, in the present invention, the problems are solved by providing an apparatus and a computer-program that provides such methods.

### BRIEF DESCRIPTION OF THE DRAWINGS

For a more complete understanding of the present invention and the advantages thereof, reference is now made to the following description taken in conjunction with the accompanying drawings.
Fig. 1 is a schematic view of the present invention.
Fig. 2 is an exemplary view of a table where the number of scheduling entries in each time slot is stored for every date.
Fig. 3 is an exemplary view of a table of maximum values of scheduling entries for every time slot.
Fig. 4 is a flowchart explaining the processing to find the table of maximum values of scheduling entries for every time slot.
Fig. 5 is a flowchart explaining the processing of a time slot calculating step.
Fig. 6 is a functional block diagram of an apparatus for creating the schedule in the first embodiment of the present invention.
Fig. 7 is a functional block diagram of a computer that provides the apparatus for creating a schedule.
Fig. 8 is an exemplary view of a table of time slot processing contents and a table where processing identifiers are associated with processing contents.
Fig. 9 is an exemplary view of another mode of the table of time processing contents.
Fig. 10 is a processing flowchart in the case of performing processing that is identified by the processing identifier by using the table of time slot processing content.

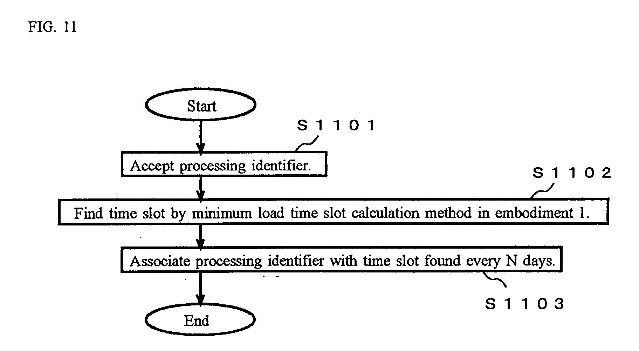

Fig. 11 is a processing flowchart of the method for creating schedule in the second embodiment of the present invention.
Fig. 12 is a functional block diagram of an apparatus for creating a schedule in the second embodiment of the present invention.
Fig. 13 is a processing flowchart of a processing maximum value updating step and a processing identifier associating step in a third embodiment of the present invention.
Fig. 14 is a functional block diagram of the apparatus for creating schedule in the third embodiment of the present invention.
Fig. 15 is a time frame control table and a resource maximum value control table in a prior art .
Fig. 16 is a functional block diagram in the state where an information consumer electronics server is connected with information consumer electronics terminals.
Fig. 17 is a view exemplifying content of the request in extended BNF.
Fig. 18 is an exemplary view where a value of 'cycle' is associated with its meaning.
Fig. 19 is an exemplary view showing the request content at the time of requesting to create a time table, control timing that the request content means, and reservation status of the time frame control table created.
Fig. 20 is an exemplary view of the time frame control table for 'every day/every month', the time frame control table for 'every week', a maximum reservation number control table for 'everyday/every month' and the maximum reservation number control table for 'every week'.
Fig. 21 is an exemplary view of the time frame control table that time frame expanding means outputs.
Fig. 22 is a processing flowchart in the case where 'every week' is specified as the 'cycle' of the request contents.
Fig. 23 is an exemplary view of reservation processing by time frame reservation means.

### PREFERRED EMBODIMENTS OF THE INVENTION

Preferred embodiments of the present invention will be described with reference to the drawings.

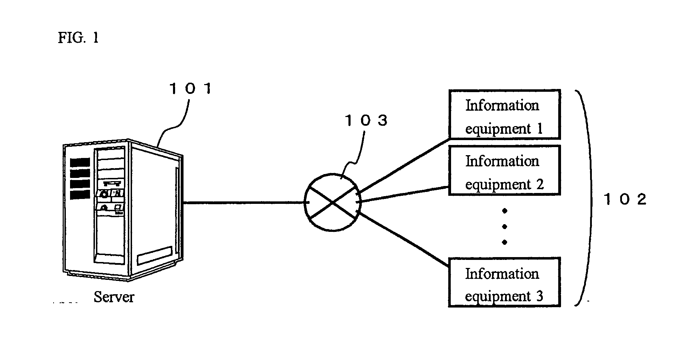

Fig. 1 exemplifies a state where the present invention is used, in which a server 101 can communicate with information equipment (information consumer electronics products represented by an information consumer electronics terminal, for example) 102 that are the client apparatuses made up of a large number of units, via a comnunication network 103. The server 101 communicates in the same time slot to each information equipment every time a specified number of days passes and transmits control instruction that perform function setting of the information equipment, collecting log for operation, or the like. Examples of such information equipment are: a personal computer; a television (including a digital television) ; a radio; a compact disk player; a cassette tape recorder; a telephone; a refrigerator; a microwave oven; an oven; a toaster; a cooking heater; a laundry machine; a drying machine; an electric kotatsu (a Japanese style table, covered by blanket, with a foot warmer) ; an electric heating pad; an electric blanket; an electric bed sheet; an electric heater; an air conditioner; a clock; a fan ; a lighting apparatus; and the like.

In the present invention, 'to perform processing in the same time slot every time a specified period passes' means that the processing is performed in the same time slot when a previously specified time, which is N days for example, passes, and the 'time slot' is a particular time period in a unit period where the specified period is measured. For example, if 'day' is used as the 'unit period', the 'time slot' is a particular time period in 1 day, and in this case, as an example 'to perform processing in the same time slot every time a specified period passes' is given that the server 101 in Fig. 1 performs communication processing with a particular information consumer electronic product in the time slot from 6:00 a.m. to 12:00 noon every time a specified period, which is every 15 days, passes. 'To bring the number of processing performed in the same time slot to the minimum' means to keep the number of processing in any time slot from standing out in a certain time slot when processing is newly added. In the following, although description will be made based on the assumption that the 'specified period' is time having 'day' as a unit, 'every time a specified period passes' is 'every N days', and the 'cycle of the specified period' is a 'cycle of N days' for convenience of explanation, the time unit is not limited to the 'day', and the present invention can be implemented on the time unit of an arbitrary length.

In the first embodiment, the method for creating schedule comprises the steps of: calculating the table of maximum values of processing number for every time slot; and calculating time slot.

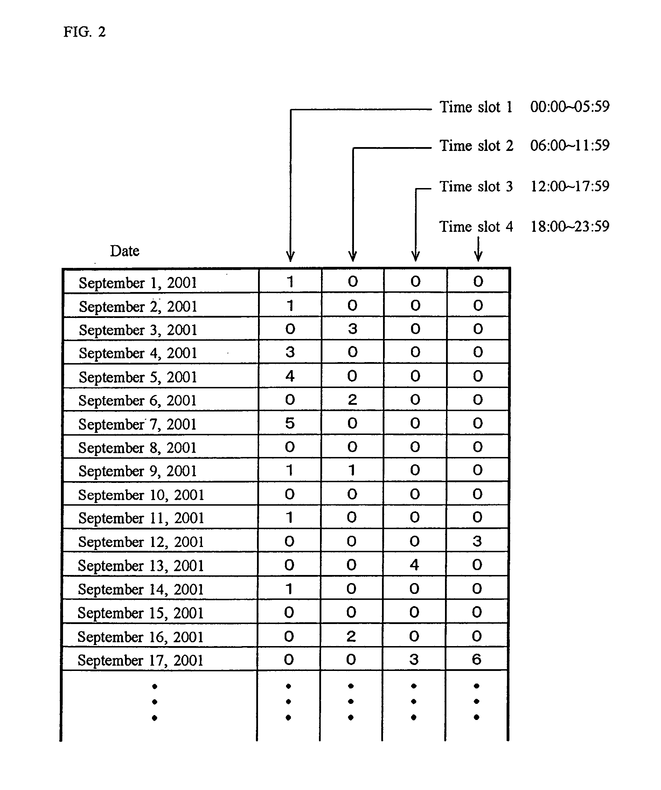

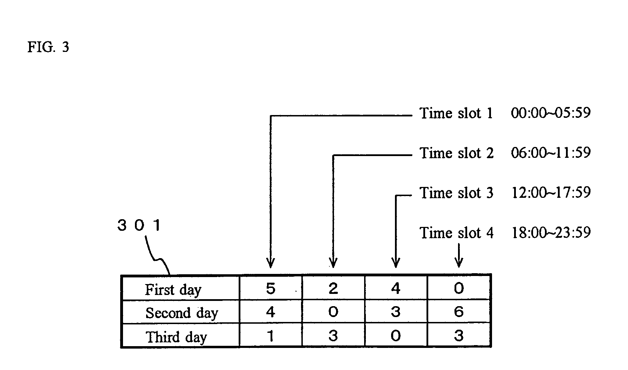

The step of calculating the table of maximum values of processing number for every time slot is a step of finding the table of maximum values of processing number for every time slot, and the 'table of maximum values of processing number for every time slot' is a table that associates the processing maximum value, which is the maximum value for each time slot regarding the number processed in the cycle of N days, with the time slot and stores therein. For example, when day 1 is divided in the time slots of every six hours, which is: time slot 1 as the first time slot is from 00:00 to 05:59; time slot 2 as the second time slot is from 06:00 to 11:59; time slot 3 as the third time slot is from 12:00 to 17:59; and time slot 4 as the fourth time slot is from 18:00 to 23:59, and the number of processing in each time slot of everyday is known as the contents of the table exemplified in Fig. 2, the maximum value for every time slot regarding the number processed in the cycle of 3 days based on N as 3 is the maximum value processed in each time slot of every 3 days from September 1, 2001, every 3 days from September 2, 2001, and every 3 days from September 3. Such maximum values are associated with storage time slots and store d therein to form the table of maxim um values of processing number for every time slot, and Table 301 of Fig. 3 exemplifies the table of maximum values of processing number for every time slot when N is set to 3. In Table 301, the row of the 'first day' stores the maximum value of the number processed in each time slot in every 3 days from September 1, 2001, that is, September 1, 2001, September 4, 2001, September 7, 2001, and so on.

Although the table shown in Fig. 2 shows the number of processing performed by the time slot of a particular day, it may be a table that stores the number of processing executed by the time slot regarding the first day, the second day, ..., the 365th day with 365 days as a cycle for example, not with the particular day such as September 1, 2001.

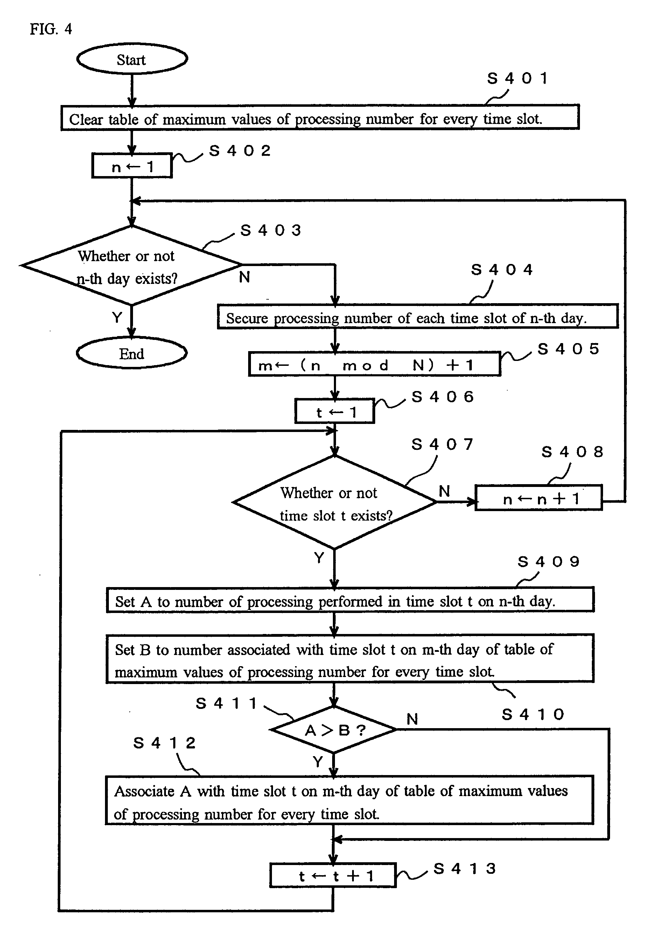

Fig. 4 is the flowchart explaining the processing to find the table of maximum values of processing number for every time slot in the step of calculating the table of maximum values of processing number for every time slot. Before the processing of Fig. 4 is performed, a table having the number of rows of N and the number of columns as many as the number of time slots of 1 day is prepared, the processing shown in the flowchart of Fig. 4 is performed for the table, and thus the table of maximum values of processing number for every time slot is formed. In step S401. the table, which becomes the table of maximum values of processing number for every time slot, is cleared. In other words, 0 is stored in all boxes of the table. In step S402, substitute a variable n that specifies each day for 1. In step S403, whether or not the n-th day exists is determined (specifically, whether or not a row that corresponds to the n-day exists is determined), the processing ends if such row does not exist, and processin g proceeds to step S404 if the n-th day exists.

In step S404, the processing number of each time slot of the n-th day is retrieved. In step S405, substitute a variable m for (n mod N)+1, that is, a value in which 1 is added to aremainder obtained when a value stored in the variable n is divided by N. The m shows that the n-th day corresponds to the m-th day in the table of maximum values of processing number for every time slot. In step S406, substi tute the variable t showing the time slot for 1, and the processing number of time slot 1, time slot 2, and so on is brought out from the processing number of each time slot of the n-th day acquired in step S404, and processing is performed.

In step S407, whethe r or not time slot t exists is determined. If it does not exist, processing proceeds to step S408 to increase the value of n only by 1 for the processing of the next day, and returns to step S403. If time slot t exists, processing proceeds to step S409, and substitute a variable A for the process ing number performed in time slot t of the n-th day. In step S410, substitute a variable B for the number associated with time slot t of the m-th day in the current table of maximum values of processing number for every time slot and stored therein. In step S411, whether or not the value substituted for A is larger than the value substituted for B is determined. If it is not larger, processing jumps to step S413, and if it is larger, processing proceeds to step S412 to associa te the value substituted for A with time slot t of the m-th day in the current table of maximum values of processing number for every time slot and store it therein, and proceeds to step S413. In step S413, the value of t is increased by 1 to perform processing of the next time slot, and processing returns to step S407.

The time slot calculating step is a step to find a time slot that stores the minimum number among the processing maximum values stored in the table of maximum values of processing number for every time slot, which has been found in the step of calculating the table of maximum values of processing number for every time slot. Specifically, the step finds the time slot that stores the minimum number among the numbers associated with the time slot and stored in the table of maximum values of processing number for every time slot . In this step, the 'time slot that stores the minimum number among the processing maximum values' does not only mean which time slot in 1 day but should also mean which time slot of what day in the cycle of N days.

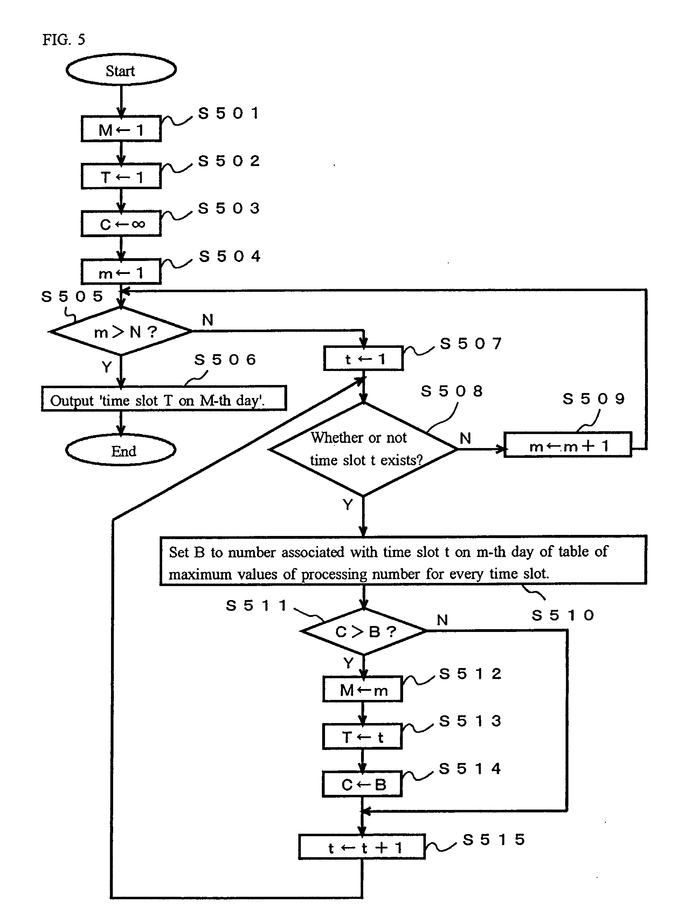

Fig. 5 is the flowchart explaining the processing of the time slot calculating step. In step S501 and S502, substitute a variable M and a variable T for 1. What is obtained as a result of the flowchart processing of Fig. 5 is the processing maximum value of which time slot of what day in the cycle of N days is the minimum, where the variable M expresses what day and the variable T expresses which time slot . In step S503, substitute a variable C for ∞ (∞ is larger than any integer) . The variable C stores the minimum value among the processing maximum values of an area where the table of maximum values of processing number for every time slot has been scanned halfway in executing the flowchart processing. In step S504, substitute the variable m for 1. The variable m is a variable that expresses the row of what day in the table of maximum values of processing number for every time slot is noted. In step S505, whether or not m is larger than N is determined. If m is larger than N, it means that all of the table of maximum values of processing number for every time slot has been scanned, and 'time slot T of M-th day ' is output to display that the processing maximun value of time slot T of the M-th day is the minimum in step S506.

In step S505, if m is not larger than N, it means that there is an area to be scanned in the table of maximum values of processing number for every time slot, and processing proceeds to step S507 to substitute the variable t for 1. The variable t expresses that the processing maximum value of the t-th time slot among the time slots is noted. In step S508, whether or not time slot t exists, in other words, whether or not there is still a time slot to be checked with. If time slot t does not exist, processing proceeds to step S509 to increase the value of the variable m by 1, and the table of maximum values of processing number for every time slot of the next day is scanned.

If time slot t exists in step S508, processing proceeds to step S510, and subst itute the variable B for the processing maximum value that is associated with time slot t of the m-th day in the table of maximum values of processing number for every time slot and stored therein. The values of C and B are compared in step S511. processing jumps to step S514 if C is not larger than B. If C is larger than B, that is, if B is smaller than C, it means that B is a smaller value than the minimum value among the processing maximum values that have been obtained by scanning. Then, substitute M and T for m and t respectively in step S512 and step S513, and substitute the value of B for C in step S514 because B is smaller than C.

In step S515, t is increased only by 1 to check with the processing maximum value of the next time slot, and processing returns to step S508.

If new processing is performed for the time slot that has been found by the method for creating schedule, which comprises: the step of calculat ing the table of maximum values of processing number for every time slot; and the time slot calculating step, the load to the server apparatus can be minimized, in other words, the apparatus can be prevented from being overloaded by an unbalanced load that a particular day or time slot is overloaded. Further, because in the step of calculating the table of maximum values of processing number for every time slot, the processing maximum value that is the maximum value for every time slot is found and it is not the sum of the number processed in every time slot, the table shown in Fig. 2 is a table that stores the number of processing executed by every time slot for the first day, the second day , ..., and the 365th day with 365 days as a cycle for example, and even in the case where N is one by which 365 day is not divisible, that is, 100 for example, the case where the number inserted in the table of maximum values of processing number for every time slot is unnatural can be avoided, more specifically, it is the case where the row of the first day is inserted with the sum of the processing number of each time slot in the first day, the 101st day, the 201st day and the 301st day, the row of the 100th day is inserted with the sum of the processing number of each time slot in the 100th day, 200th day and the 300th day, and the row of the 100th day is obviously inserted with a smaller value than the one of the first day.

Furthermore, when the table shown in Fig. 2 is the table that stores the number of processing executed by every time slot for the first day, the second day, ..., and the 365th day with 365 days as a cycle, the table itself exemplified in Fig. 2 can be regarded as the table of maximum values of processing number for every time slot in the cycle of 365 days, a time slot where the processing maximum value in the cycle of 365 days becomes minimum can be found in the time slot calculating step, and schedule in the cycle of 365 days can be created in addition to creating schedule in the cycle of N days.

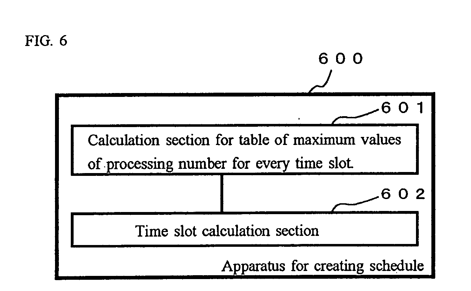

Note that the method for creating sche dule in the embodiment can be realized by an apparatus for creating schedule 600 that comprises a calculation section for table of maximum values of the processing number for every time slot 601; and a time slot calculation section 602, whose functional block diagram is exemplified in Fig. 6. The calculation section for table of maximum values of processing number for every time slot 601 realizes the step of calculating the table of maximum values of processing number for every time slot, and the time slot calculation section 602 implements the time slot calculating step.

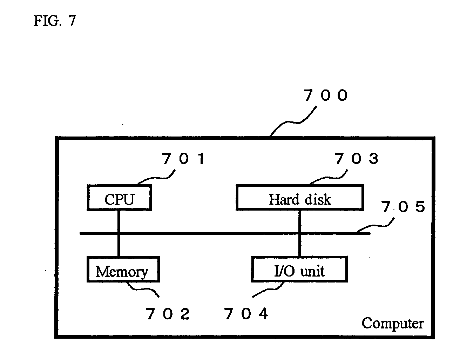

Such an apparatus for creating schedule 600 can be implements by using a computer. Fig. 7 exemplifies the functional block diagram of the computer 700, and the computer 700 includes: a CPU 701; a memory 702; a hard disk 703; an I/O unit 704, which are integrated by a bus 705 with each other. The hard disk 703 provides a function to hold contents to be held even if a power source of the computer is cut off . For example, it hold s the table shown in Fig. 2 that holds the processing number for every time slot of each day and stores a computer-program that causes the computer 700 to execute the step of calculating table of maximum values of processin g number for every time slot and the time slot calculating step. Such a computer-program is loaded to the memory 702 and executed by the CPU 701. The I/O unit 704 is a display and a keyboard, which are used for inputting data of the table exemplified in Fig. 2, outputting a result of the computer-program (the time slot found in the time slot calculating step), or the like.

Further, the computer 700 includes a communication interface that communicates with the server 101, in which the contents of the table exemplified in Fig. 2 is transmit ted to the computer 700 and the computer 700 may transmit the result of computer-program for the table to the server 101.

In the second embodiment of the present invention, the processing performed in the same time slot every N days in the first embodiment is performed based on a table of time slot processing contents, where a time slot, in which processing is performed, is associated with the processing identifier, which is an identifier to identify processing to be performed in the time slot, and held.

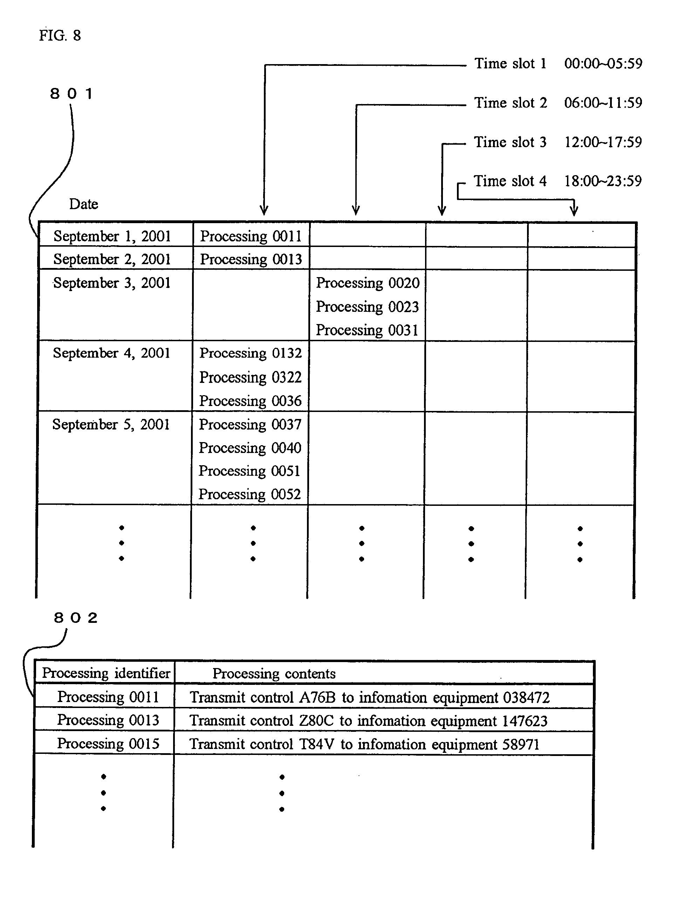

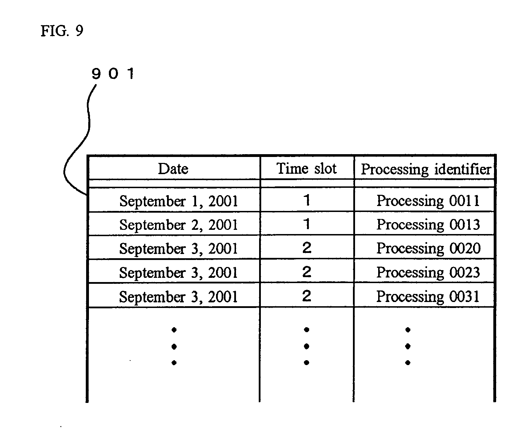

Table 801 of Fig. 8 exemplifies the table of the time slot processing contents, in which the processing identifiers (processing 0011 and the like) are held, indicating which processing should be performed in the time slots of each day. The contents of processing identified by the processing identifiers are associated with the processing identifiers and held in Table 802. As another mode of Table 801, a mode of table is cited in which the processing identifiers are associated with dates and time slots and stored as shown in Fig. 9; and it may express that processing identified by which processing identifier is processed in which time slot of what date.

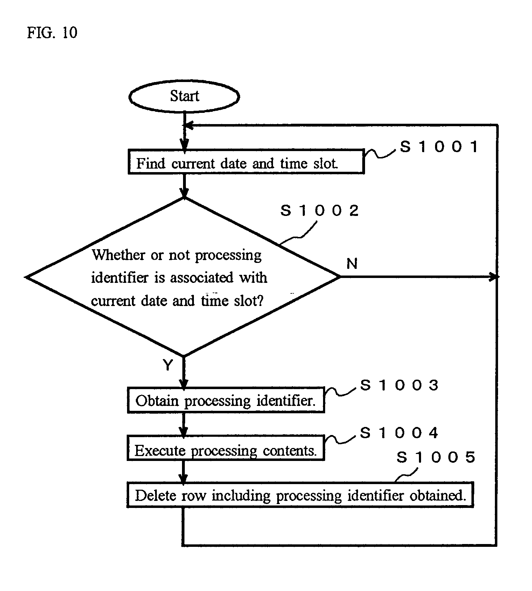

Fig. 10 is a flowchart where processing is performed based on the table of the time slot processing contents in this embodiment, and the current date and the time slot are found in step S1001 first. In step S1002, whether or not a processing identifier is associated with the current date and the time slot found in step S1001 is determined. Regarding this determination, the table of Fig. 9 is retrieved by the date and time slot, and determination is made by presence of the result retrieved. If there is no associated processing identifier, processing returns to step S1001 because processing to be performed does not exist.

If processing to be performed exists, it moves to step S1003 to obtain the processing identifier. In step S1004, the processing content is obtained from the processing identifier obtained in step S1003 out of Table 802 where the processing identifiers are associated with the processing contents, and it is executed. In step S1005, the row including the processing identifier obtained in step S1003 is deleted, and processing returns to step S1001.

In this embodiment, processing is performed based on the table of processing contents as described herein, and the method for creating schedule further includes: a processing identifier accepting step; and a processing identifier associating step. The processing identifier accepting step is a step of accepting the processing identifier. The processing identifier associating step is a step of associating the processing identifier accepted by the processing identifier accepting step with the time slot found in the time slot calculating step and holding in the table of the time slot processing contents. When the table of the time slot processing contents is in the mode exemplified in Table 901 of Fig. 9, a row that includes the date, the time slot and the processing identifier is inserted in-Table 901. For example, when N is 3, the processing identifier is processing 1234, and time slot 3 of the second day that has been found by the time slot calculating step, rows such as (September 2, 2001, 3, processing 1234), (September 5, 2001, 3, processing 1234), (September 8, 2001, 3, processing 1234), and so on are inserted. Note that insertion of rows may continue to a place of the table exemplified in Fig. 2 where a date does not exist, or for example, it may end halfway until the third time that is September 8, 2001, although dates until September 30, 2001 are in the table exemplified in Fig. 2.

Fig . 11 exemplifies the flowchart of the method for creating a schedule of this embodiment, and it accepts the processing identifier in the step S1101. For example, in the case where the method for creating schedule of this embodiment is realized by the computer 700, the I/O unit 704 accepts the processing contents, the processing identifier is decided at the time of inserting them in Table 802, and the processing identifier that has been decided at that time is accepted.

In step S1102, the method for creating schedule in Embodiment 1 finds the time slot.

In step S1103, the time slot found for every N days is associated with the processing identifier. Specifically, the rows such as (September 2, 2001, 3, processing 1234), (September 5, 2001, 3, processing 1234), (September 8, 2001, 3, processing 1234), and so on are inserted, as described above.

With this embodiment, the processing contents are associated with the time slot where the load to the server is minimized and processing is executed, and thus the load to the server is minimized.

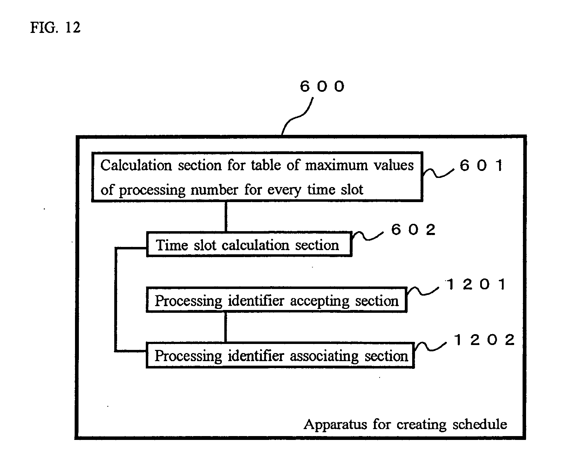

The method for creating schedule in this embodiment can be realized by the apparatus for creatin g schedule 600 shown in Fig. 12. In Fig. 12, the apparatus for creating schedule 600 is one in which a processing identifier accepting section 1201 and a processing identifier associating section 1202 are added to the apparatus for creating schedule in Embodiment 1. The processing identifier accepting section 1201 realizes the processing identifier accepting step, which transmits the processing identifier accepted to the processing identifier associating section 1202. The processing identifier ass oci at ing section 1202 receives the time slot from the time slot calculation section 602, receives the processing identifier from the processing identifier accepting section 1201, and thus realizes the processing identifier associating step.

In the third embodiment, provided is a method for creating a schedule, which does not need to perform the step of calculating the table of maximum values of processing number for every time slot of the first embodiment every time. In this embodiment, the processing identifier associating step is characterized in that the processing identifier is associated and stored in the table of the time slot processing contents one by one, and the method for creating a schedule in this embodiment further includes a processing maximum value updating step.

The processing maximum value updating step is a step in which. when the number of processing identified by the processing identifier, which is associated with the time slot found by the time slot calculating step and held therein, and the processing maximum value, which is associated with the concerned time slot of the table of maximum values of processing number for every time slot and stored therein, are equal, the processing maximum value associated with the time slot of the table of maximum values of processing number for every time slot and stored therein is increased by 1. 'The number of processing identified by the processing identifier, which is associated with the time slot found by the time slot calculating step and held therein' is the number of processing identified by the processing identifier, which is associated with the time slot found in the time slot calculating step of the table of time slot processing contents before a processing identifier is newly associated by the processing identifier associating step.

The processing maximum value updating step is described using examples as follows. For example, when N is set to 3, time slot 3 of the second day is found by the time slot calculating step, and two rows such as (September 2, 2001, 3, processing 1234) and (September 5, 2001, 3, processing 1234) are inserte d in Table 901 of Fig. 9, the number of processing performed in time slot 3 on September 2, 2001 is found first before inserting (September 2, 2001, 3, processing 1234). The number of processing can be found by retrieving Table 901 of Fig. 9 for the number of rows in which the time slots are in three columns on September 2, 2001. Then, whether or not the number of processing that has been found (the number should be P) is equal to the processing maximum value, which is associated with time slot 3 on the second day in the table of maximum values of processing number for every time slot and stored therein, is checked. If they are equal, since the processing maximum value increases by 1 by inserting (September 2, 2001, 3, processing 1234), the numb er associated wit h time slot 3 on the second day in the table of maximum values of processing number for every time slot and stored therein as the processing maximum value is increased by 1, and (September 2, 2001, 3, processing 1234) is inserted. If they are not equal, according to the definition of the processing maximum value, since P is smaller than the processing maximum value associated with time slot 3 on the second day in the table of maximum values of processing number for every time slot and stored therei n, and the processing maximum value does not change even if (September 2, 2001, 3, processing 1234) is inserted, (September 2, 2001, 3, processing 1234) is simply inserted.

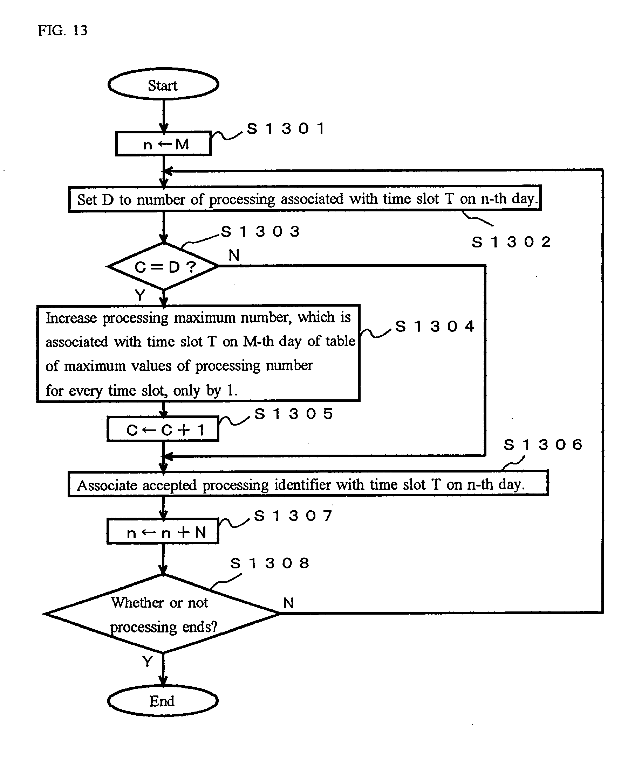

Fig. 13 exemplifies the flowchart of processing in the processing maximum value updating step and the processing identifier associating step of this embodiment. In step S1301, substitute n for M. Reference code M is a value that expresses what day in which time slot on what day, which has been found in the time slot calculating step. Further, the value that expresses which time slot should be T. In step S1302, substitute a variable D for the number of processing associated with time slot T on the n-th day. The number of processing associated with time slot T on the n-th day can be found by retrieving Table 901 of Fig. 9 as described above. In step S1303, whether or not C and D are equal to each other is determined. Reference code C is a variable that stores the processing maximum value associated with time slot t on the M-th day in the table of maximum values of processing number for every time slot and stored therein. If C and D are different, processing jumps to step S1306 because C<D holds according to the definition of the processing maximum value. If C and D are the same, processing proceeds to step S1304 to increase the processing maximum value, which is associated with time slot T on the M-th day in the table of maximum values of processing number for every time slot and stored therein, only by 1. In step S1305, the value of the variable C is increased by 1. Step S1306 is the processing identifier associating step, which associates time slot T on the n-th day with the processing identifier. In step S1307, N of the cycle is added to the variable n. In step S1308, whether or not association of processing identifier has ended is determined, the entire processing ends when it has ended, and processing returns to step S1302 if not.

With this embodiment, a task to find the table of maximum values of processing number for ever y time slot is reduced, and thus operation of creating schedule can be efficiently performed.

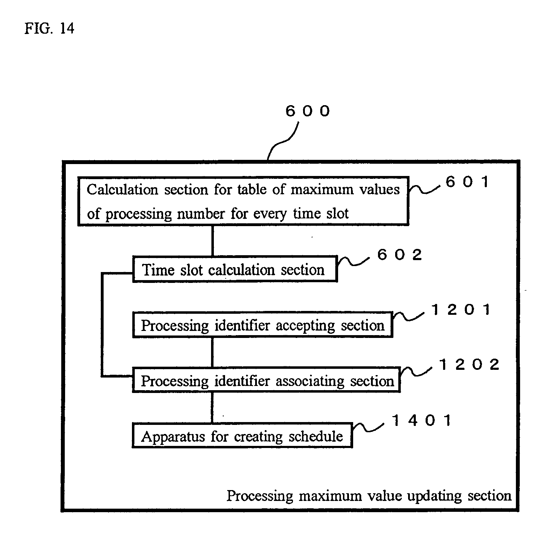

Note that the method for creating a schedule of this embodiment can be realized by the apparatus for creating schedule 600 exemplified in Fig. 14. The apparatus for creating schedule 600 exemplified in Fig. 14 is one in which a processing maximum value updating section 1401 is added to the apparatus for creating schedule of Embodiment 2. The processing maximum value updating section 1401 is a section to realize the processing maximum value updating step.

The following relates to additional embodiments

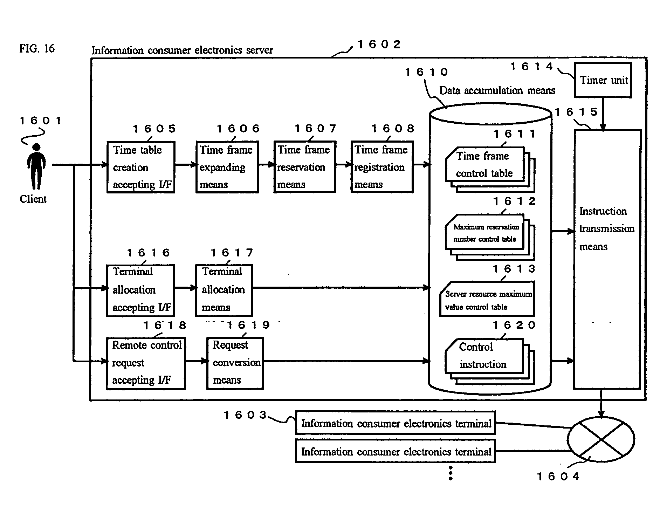

Fig. 16 is the functional block diagram of the server of this embodiment configured with the information equipment. In this diagram, although the server is shown as an information consumer electronics server, it may be a server for general information equipment. In Fig. 16, reference numeral 1601 denotes a client who requests remote control of the information consumer electronics terminal, which is the information equipment, to the information consumer electronics server, and 1602, the information consumer electronics server that creates schedule of the control instruction corresponding to request contents for the client's request contents and that transmits the control instruction to an information consumer electronics terminal specified on a day and time specified by the client, which has a mode that includes the foregoing apparatus for creating a schedule. Reference numeral 1603 denotes the information consumer electronics terminal that receives the control instruction transmitted from the information consumer electronics server and renders to execute the contents of the control instruction; 1604, anetwork that connects the information consumer electronics server with the information consumer electronics terminals; 1605, a time table creation aoce pting I/F that becomes an interface to accept a time table creation request from the client by the information consumer electronics server; 1606, the time frame expanding means that performs processing, which expands in a time frame of an effective range, in order to perform resource control for every time frame based on the request contents that the time table creation accepting I/F has accepted; 1607, time frame reservation means that performs processing of securing reservation of resource for every time frame; 1608, time frame registration means that performs processing to register the time frame, whose reservation has been secured in the time frame reservation means, with a time frame control table in data accumulation means; 1610, the data accumulation means that accumulates and controls various kinds of electronic data represented by a so-called data base, hard disk or the like; 1611, the time frame control table that controls reservation status of resource for every time frame and allocation status of information consumer electronics terminals ; 1612, one that exists for one time frame control table, and it is a maximum reservation numb er control table that controls the reservation number for every time slot in a corresponding time frame control table, which is the table of maximum values of processing number for every time slot of the first through third embodiments; 1613, a server resource maximum value control table that controls the maximum value of resource of the information consumer electronics server; 1614, a timer unit that continues to tick the time in a specified interval; 1615, instruction transmission means for the information consumer electronics terminal that the time frame control table controls, which obtains the control instruction created for the information consumer electronics terminal from a control instruction control DB when the day and time obtained from the timer unit for the information consumer electronics terminal controlled on the time frame control table has come to the day and time of a time frame where the information consumer electronics terminal belongs, and transmits the control instruction to the information consumer electronics terminal; 1616, a terminal allocation accepting I/F that becomes an interface to accept a terminal allocation request from the client by the information consumer electronics server; 1617, terminal allocation means that performs allocation processing of information consumer electronics terminals by associating the information consumer electronics terminal specified by the client with a time frame in the time frame control table; 1618, a remote control request accepting I/F that becomes an interface to accept a remote control request from the client by the information consumer electronics server; 1619, request conversion means that creates the control instruction, which correspond with remote control request contents, and performs processing to register it with the control instruction DB; and 1620, the control instruction in which the control request contents from the client is converted by the request conversion means into a form that can be rendered and executed by the information consumer electronics terminal.

Detailed description for each block that constitutes the information consumer electronics server 1602 will be made as follows

The request contents performed by the client 1601 are: a time table creation request; a terminal allocation request; and a remote control request, and the client transmits these request contents to the time table creation accepting I/F 1605, the terminal allocation accepting I/F 1615 and the remote control request accepting I/F 1617, of the information consumer electronics server, respectively.

In Fig. 16, although the client 1601 positions outside the information consumer electronics server 1602, the effects described in this embodiment can be obtained in the case where the client positions inside the information consumer electronics server 1602 as well.

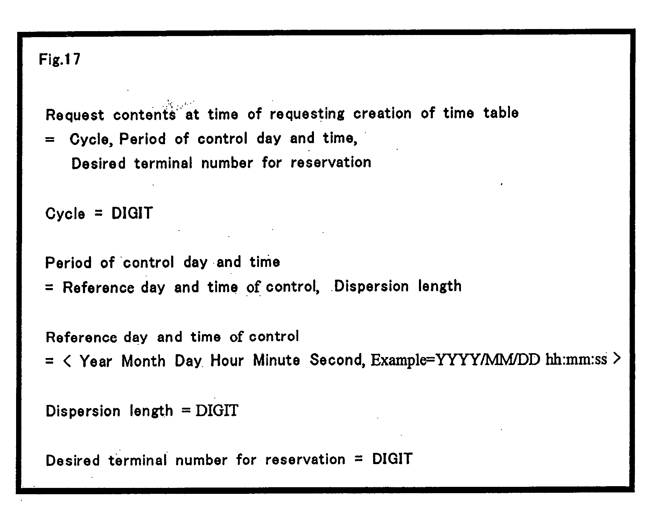

Fig. 17 is the content of the request that the client 1601 transmits to the time table creation accepting I/F 1605 at the time of requesting creation of time table, which is expressed in the extended BNF. The 'cycle' is a value specified to the information consumer electronics server when the client 1601 performs a cyclic repetition control to the information consumer electronics terminal.

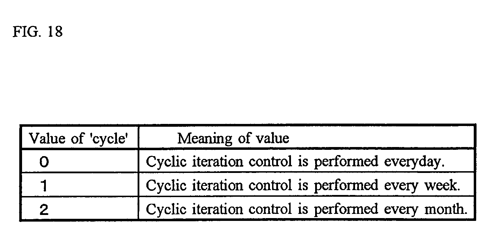

Fig. 18 shows correspondence between values specified for the 'cycle' and meanings of the values specified. In the case where '2' is specified for the 'cycle' of the request contents at the time of requesting creation of time table, a subject of processing in the information consumer electronics server 1602 is based on 'every month' . For example, the time frame control table 1611 registered by the time frame registration means 1608 should have the attribute of 'every month'. A 'period of control day and time' is information necessary to calculate reference day and time in the case where the information consumer electronics server 1602 performs remote control to the information consumer electronics terminal 1603 in a cyclic timing. A 'reference day and time of control' that is the first parameter of the 'period of control day and time' disperses the server resource using the day and time as a reference. A 'dispersion length' that is the second parameter is the length of a range where the server resource is dispersed. A 'desired terminal number for reservation' shows the number of information consumer electronics terminals reserved in a newly created time frame control table.

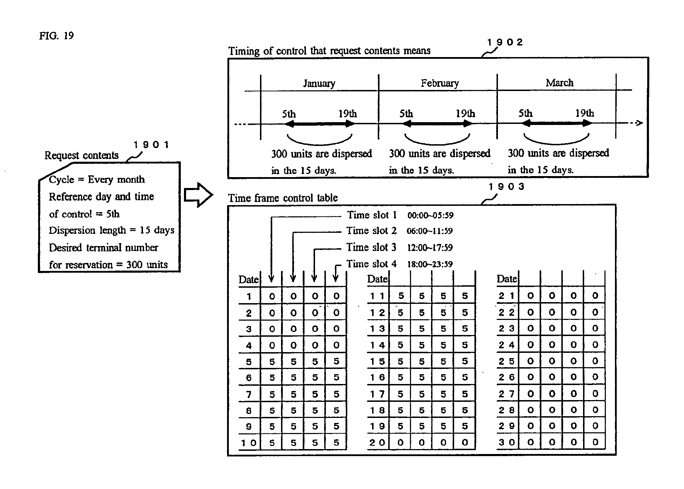

The time frame control table created according to the time table creation request is one in which the information consumer electronics terminals of the 'desired terminal number for reservation' are dis persed in the range of the 'dispersion length' from the 'reference day and time of control'. Fig. 19 shows the request contents at the time of requesting creation of time table, a timing of control that the request contents mean, and reservation status of the time frame control table created. In the case of the request contents as request contents 1901, the information consumer electronics server performs remote control on a specified day and time every month to individual information consumer electronics terminal. Dispersion of server resource is performed in the range of the 'dispersion length' from the 'reference day and time of control'. The time slots where 1 day is divided in to quarters (time slot 1 = 00:00 to 05:59, time slot 2 = 06:00 to 11:59, time slot 3 = 12:00 to 17:59, time slot 4 = 18:00 to 23 :59) are used as an example of the time frame, since the 'desired terminal number for reservation' = 300 units are disper sed in the time frames of 15×4 = 60, the reservation status in the range is 300÷60 = 5 reservations. The reservation status in other area is: the reservation number = 0.

Herein, the length of time slot range controlled by the maximum reservation number control table will be described. Regarding the 'cycle' processed by the information consumer electronics server in this embodiment, the three kinds of 'cycles' that are 'everyday', 'every week' and 'every month' as shown in Fig. 18 can be specified as the request contents.

In this case, ranges with nature of a common divisor in each cycle are: 1 day (=24 hours), 8 hours, 6 hours, and the like in the case of 'everyday'; 7 days, 1 day (=24 hours), 8 hours, 6 hours, and the like in the case of 'every week'; and 30 days, 1 day (=24 hours), 8 hours, 6 hours, and the like in the case of 'every month'. Accordingly, in order to bring the range of time slot controlled by the maximum reser vat ion number cont rol table to the range having the common divisor among a plurality of cycles, a length of 1 day (a length of 24 hours), which is the range with nature of the least common multiple among the cycles, has been selected as the range of time slot controlled by the maximum reservation number control table in this embodiment.

Further, although the time slot where the length of 1 day (the length of 24 hours ) are divided into quarters is used as an example in this embodiment, the length of 1 day (the length of 24 hours) can be divided into 86, 400 equal parts to control it on the second time scale, 1, 440 equal parts to control it on the minute time scale, and 24 equal parts to control it on the hour time scale. When this is generally described, the length of range with nature of the least common multiple is divided equally by a unit of divisor of the length, that is, the unit by which the length is divisible.

Furthermore, when the length of the range of time slot controlled by the maximum reservation number control table is set to the length of 1 day (the length of 24 hours ), the 'cycles' of 'everyday' and 'every month' are in an inclusive relation on actual life, and thus they can be controlled by the same time frame control table.

On the other hand, in the case of the 'cycles' of 'every month' and 'every week', the cycles are not on the inclusive relation because even when the first day of a month is Monday. the first day of the next month is not necessarily Monday.

Accordingly, when the three kinds of ' cycles' that are 'everyday', 'every week' and 'every month' can be specified as the request contents as shown in Fig. 18, the time frame control tables controlled by the information consumer electronics server 1602 are two kinds: the time frame control table that controls 'everyday/every month' in common; and the time frame control table that controls 'every week' , and the data accumulation means 1610 controls the two kinds of time frame control tables as the time frame control tables 1611. In the same manner, regarding the maximum reservation number control table, the data accumulation means 1610 controls two kinds of tables: the maximum reservation number control table that controls 'everyday/every month' in common; and the maximum reservation number control table that controls 'every week' as the maximum reservation number control tables 1612.

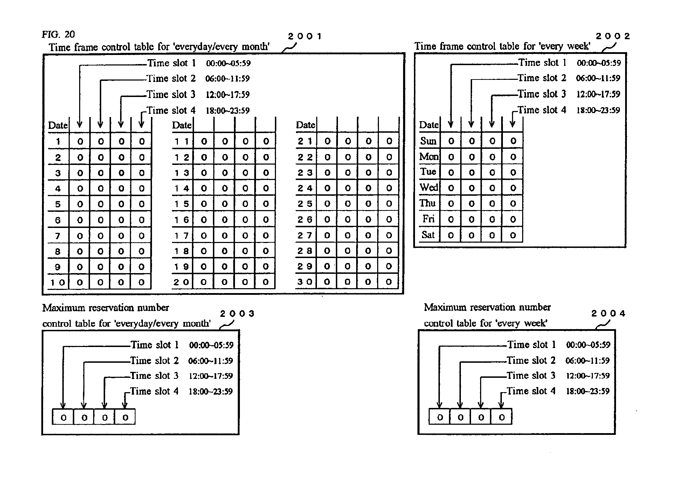

Fig. 20 shows examples of a time frame control table for 'everyday/every month' 2001, a time frame control table for 'every week' 2003, a maximum reservation number control table for 'everyday/every month' 2002, and a maximum reservation number control table for 'every week' 2004, which are controlled by the data accumulation means 1610.

In this embodiment, since the time slots where a day is divided into quarters (time slot 1 = 00:00 to 05:59, time slot 2 = 06:00 to 11:59, time slot 3 = 12:00 to 17:59, time slot 4 = 18 :00 to 23: 59 ) are used as an example of the time frame, the time slots for 1 day is divided into four in each time frame control table.

In addition, since the length of the range of time slot controlled by the maximum reservation control table is set to the length of 1 day (the length of 24 hours) in the similar manner, each maximum reservation number control table has the length of 1 day (the length of 24 hours) as the length of the range of time slot, and has the time frames for every time slot that has been quartered.

When the time table creation accepting I/F 1605 receives the request contents of the time table creation request, it outputs the contents to the time frame expanding means 1606.

The time frame expanding means 1606, using the request contents of the time table creation request that the time table creation accepting I/F 1605 output as an input, performs processing to expan d in the time frame of an effective range, and outputs an effective range flag table after expanding processing.

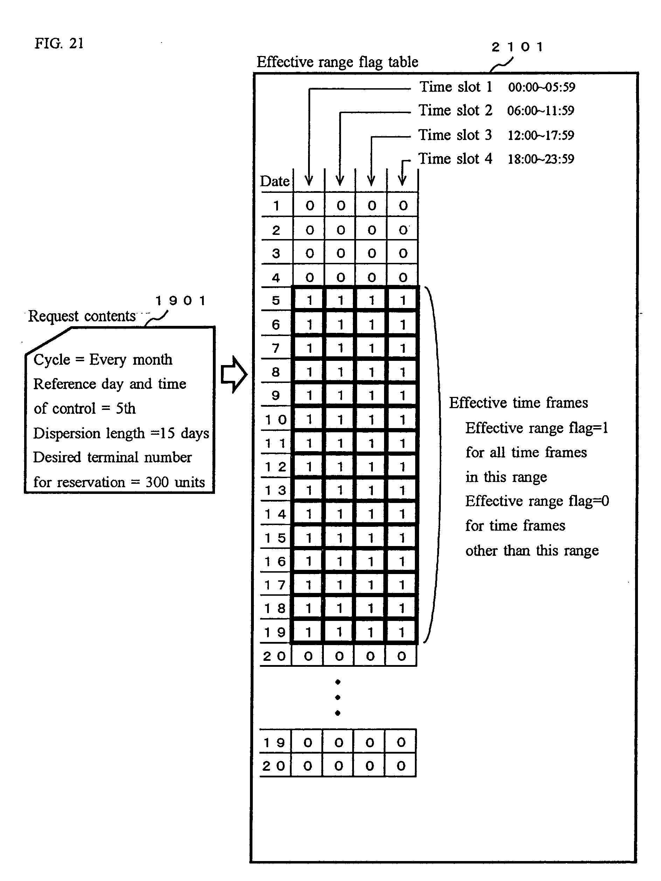

Fig. 21 shows an example of the time frame control table that the time frame expanding means 1606 outputs in the case of the request contents as in the reque st contents of Fig. 19. In Fig. 21, the time frames that correspond to the 'dispersion length' from the 'reference day and time of control' of the request contents are in bold frames in an effective range flag table 2101. As described, regarding each time fram e of the effective flag table that the time frame expanding means 1606 outputs, the time frames that correspond to the 'dispersion length' from the 'reference day and time of control' are set to '1' as a value meaning that the concerned frame is included in the effective range, other time frames are set to '0' as a value meani ng that they are not included in the effective range, and the effective range flag table is output.

The time frame reservation means 1607, using the effective range flag table (the time frame control table) and the maximum reservation number control table as an input, performs reservation processing and outputs the time frame control table 1611 and the maximum reservation number control table 1612 after performing reservation processing.

The processing in the time frame reservation means 1607 varies depending on the 'cycle' of request contents specified. Description will be made for the case where 'every week' is specified for the 'cycle' of request contents.

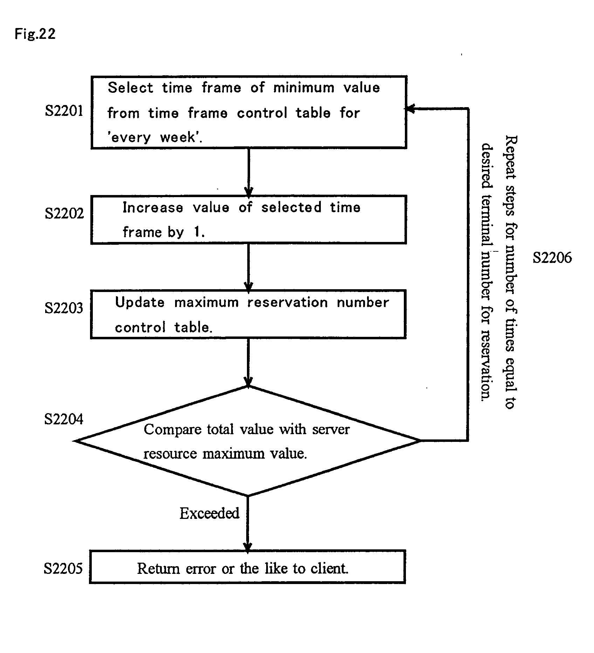

Fig. 22 shows the flowchart of processing in the time frame reservation means 1607 when 'every week' is specified for the 'cycle' of request contents.

In step S2201, the time frame of the minimum value is selected out of the time frames where the value in the effective range flag table is in '1', from the time frame control table 1611 for 'every week', which is accumulated in the data accumulation means 1610. When a plurality of time frames are in the table, any one time frame is selected at random.

In step S2202, the value of the time frame selected in step S2201 is increased by 1.

In step S2203, the maximum reservation number control table 1612 for 'every week', which is accumulated in the data accumulation means 1610, is updated.

Furthermore in step S2203, the total value of every time slot corresponding to the time frame selected S2201 is found with regard to all maximum reservation numb er control table accumulated in the data accumulation means 1610. If the total value does not exceed the maximum value of the time slot of the server resource control table 1613 accumulated in the data accumulation means 1610 (in the case of branching to a direction where 'exceeded' is not written in step S2204), it is determined that an additional reservation of new resource can be made for the day and time, and processing of additional reservation is performed. If the total value exceeds the maximum value of the time slot of the server resource control table 1613 (in the case of branching to a direction where 'exceeded' is written in step S2204), a response such as an error, which means the client 1601 cannot issue arequest, is returned in step S2205.

As step S2206, steps from S2201 to S2204 are repeated for a number of times equal to the 'desired terminal number for reservation' of the request contents. When the reservation processing is performed for the number of times equal to all the 'desired terminal number for reservation', the time frame control table 1611 and the maximum reservation number control table 1612 after reservation processing are output.

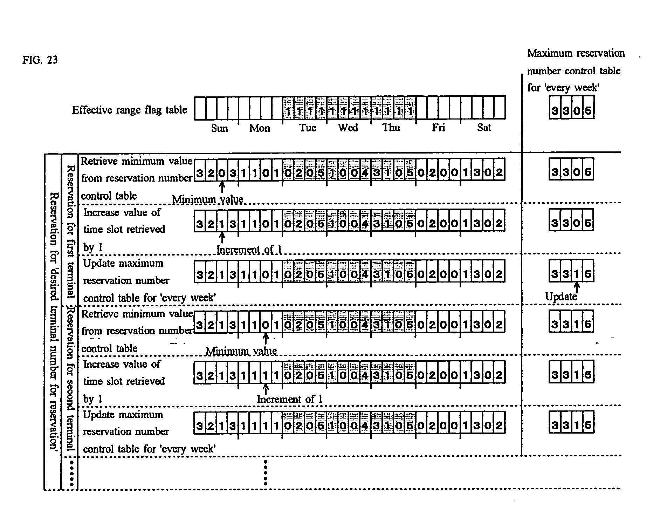

Fig. 23 shows an example of reservat ion processing in the time frame reservation means 1607. Firstly, for reservation of the first terminal, the minimum value is retrieved from the preservation control table and the value of time slot retrieved is increased by 1. Then, the maximum reservation number control table for 'every week' is updated if necessary.

As described above, by using the maxi mum reservation number control table, only the area of time slot, where the minimum value is stored, of the maximum reservation number control table may be scanned without scanning all entri es of the time frame control table, and thus the time slot to be allocated can be found efficiently.

As described above, according to the present invention, firstly, the load to the server
can be minimized, in other words, the apparatus can be prevented from over loaded by unbalanced load that a particular day or time slot is overloaded. Further, since the processing maximum value is found and it is not the sum of the number-processed in every time slot, Fig. 2 is the table that stores the number of processing executed by every time slot for the first day, the second day, ..., and the 365th day with 365 days as a cycle for example, and even in the case where N is one by which 365 day is not divisible, that is, 100 for example, the case where the number filled in the table of maximum values of processing number for every time slot is unnatural can be avoided, more specifically, it is the case where the row of the first day is inserted with the sum of the processing number of each time slot in the first day, the 101st day, the 201st day and the 301st day, the row of the 100th day is inserted with the sum of the processing number of each time slot in the 100th day, 200th day and the 300th day, and the row of the 100th day is obviously filled with a smaller value than the one of the first day.

Furthermore, when the table shown in Fig. 2 is the table that stores the number of processing executed by every time slot for the first day, the second day, ..., and the 365th day with 365 days as a cycle, the table itself exemplified in Fig. 2 can be regarded as the table of maximum values of processing number for every time slot in the cycle of 365 days, a time slot where the processing maximum value in the cycle of 365 days becomes minimum can be found, and schedule in the cycle of 365 days can be created in addition to creating schedule in the cycle of N days.

Secondly, since processing contents are associated with the time slot where the load to the server is minimum and processing is executed, processing is executed such that the load to the server is minimized.

Thirdly, a task to find the table of maximum values of processing number for every time slot is reduced, and the operation to create schedule can be efficiently performed.

Fourthly, since only a time slot, where the minimum value is stored, of the maximum reservation number control table may be allocated in order to allocate the time slot for processing, there is no need to scan all entries of the time frame control table, and thus the time slot can be allocated efficiently.

Although the preferred embodiments of the present invention have been describe in detail, it should be understood that various changes, substitutions and alternations can be made therein without departing from spirit and scope of the inventions as defined by the appended claims.

## Claims

1. A method for creating a schedule to find a time slot in which processing performs d in the same time slot is minimized under a rule that processing is performed in a same time slot every time a specified period passes, said method comprising the steps of:
calculating a table of maximum values of processing number for every time slot to find the table of maximum values of processing number for each time slot, wherein a processing maximum value, which is the maximum value in every time slot of the number of processing performed in a cycle of specified period, is associated with the time slot and stored therein; and
calculating a time slot, which finds a time slot with which a minimum value among maximum values stored in the table of maximum values of processing number for every time slot, which has been found in the step of calculating the table of maximum values of processing number for every time slot, is associated and stored therein.

2. The method for creating schedule according to Claim 1, wherein said processing performed in the same time slot every time a specified period passes is performed based on a table of time slot processing content s, where a time slot, in which processing should be performed, and a processing identifier, which is an identifier to identify the processing to be performed in the time slot, are associated with each other and held, said method further comprising the steps of:
accepting a processing identifier, which accepts said processing identifier; and
associating a processing identifier, which associates the processing identifier accepted by the step of accepting a processing identifier with the time slot found in the step of calculating time slot and stores in said table of time slot processing contents.

3. The method for creating schedule according to Claim 2, wherein the processing identifier is associated one by one with the table of time slot processing contents in the step of associating processing identifier, said method further comprising the step of:
updating a processing maximum value, which increases the processing maximum value associated with said time slot in the table of maximum values of processing number for ever y time slot and stored therein, in the case where the number of processing, which is identified by the processing identifier associated with the time slot found in said step of calculating time slot and stored therein, is equal to the processing maximum value, which is associated with the time slot of said table of maximum values of processing number for every time slot and stored therein.

4. An apparatus for creating schedule to find a time slot in which the number of processing performed in the same time slot is minimized under a rule that the processing is performed in a same time slot every time a specified period passes, said apparatus comprising:
a calculation section for a table of maximum values of processing number for every time slot to find the table of maximum values of processing number for each time slot, where a processing maximum value, which is a maximun value in every time slot of the number of processing performed in a cycle of specified period, is associated with the time slot and stored therein; and
a time slot calculation section, which finds a time slot with which a minimum value among maximum values stored in the table of maximum values of processing number for every time slot, which has been found in the calculation section for the table of maximum values of processing number for every time slot, is associated and stored therein.

5. The apparatus for creating schedule according to Claim 4, wherein said processing performed in a same time slot every time a specified period passes is performed based on a table of time slot processing contents, where a time slot, in which processing should be performed, and a processing identifier, which is an identifier to identify the processin g to be performed in the time slot, are associated with each other and held, said apparatus further comprising:
a processing identifier accepting section, which accepts said processing identifier; and
a processing identifier associating section, which associates the processing identifier accepted by the processing identifier accepting section with the time slot found in the time slot calculation section and stores in said table of time slot processing contents.

6. The apparatus for creating schedule according to Claim 5, wherein the processing identifier is associated one by one with the table of time slot processing contents in the processing identifier associating section, said apparatus further comprising:
a processing maximum value updating section, which increases the proce ssing maximum value associated with said time slot in the table of maximum values of processing number for every time slot and stored therein, in the case where the number of processing, which is identified by the processing identifier associated with the time slot found in said time slot calculating section and stored therein, is equal to the processing maximum value, which is associated with the time slot of said table of maximum values of processing number for every time slot and stored therein.

7. The apparatus for creating schedule according to any one of Claims 4 to 6, wherein
said processing performed in the same time slot every time a specified period passes is process ing in which a server makes calling-out to information equipment to transmit control instruction.

8. A computer program for creating schedule to find a time slot in which processing performed in the same time slot is minimized under a rule that processing is parformed in the same time slot every time a specified period passes, said computer-program causing a computer to execute the steps of:
calculating a table of maximum values of processing number for every time slot to find the table of maximum values of processing number for each time slot, wherein a processing maximum value, which is the maximum value in every time slot of the number of processing performed in a cycle of specif ied period, is associated with the time slot and stored therein; and
calculating a time slot, which finds a time slot with which a minimum value among maximum values stored in the table of maximum values of processing number for every time slot, which has been found in the step of calculating the table of maximum values of processing number for every time slot, is associated and stored therein.
